# DEMANDE DE BREVET EUROPEEN

(11) **EP 1 449 701 A1**
(43) Date de publication de la demande: **25.08.2004**
(21) Numéro de dépôt: 04290483.9
(22) Date de dépôt: 23.02.2004
(51) Int. Cl.: B60K 6/04

(54) **Dispositif d'accouplement entre l'arbre moteur d'un moteur thermique d'un groupe motopropulseur hybride d'un véhicule automobile et l'arbre primaire de la boîte de vitesses de ce véhicule**

(30) Priorité: 24.02.2003 FR 0302228
(71) Demandeur: Peugeot Citroen Automobiles SA, 78140 Vélizy Villacoublay (FR)
(72) Inventeur: Combes, Emmanuel Jean Nicolas, 91410 Saint Cyr Sous Dourdan (FR); Jouve, Pierre-André Jacques Damien, 92290 Chatenay Malabry (FR)
(74) Mandataire: Berger, Helmut

(57) **Abrégé**

La présente invention concerne un dispositif d'accouplement entre l'arbre moteur d'un moteur thermique d'un groupe motopropulseur hybride d'un véhicule automobile et l'arbre primaire de la boîte de vitesses de ce véhicule.

Le dispositif est caractérisé en ce qu'il comprend une roue libre (18) interposée entre l'arbre moteur (11) et l'arbre primaire (10) de la boîte de vitesses et pouvant occuper un état libre auquel les deux arbres (10, 11) ne sont pas accouplés l'un à l'autre et un état bloqué auquel les deux arbres (10, 11) sont accouplés l'un à l'autre.

L'invention trouve application dans le domaine de l'automobile.

## Description

La présente invention concerne un dispositif d'accouplement entre l'arbre moteur d'un moteur thermique faisant partie d'un groupe motopropulseur hybride d'un véhicule automobile et l'arbre primaire de la boîte de vitesses associée au moteur thermique.

Un groupe motopropulseur hybride nécessite l'automatisation de la transmission (boîte de vitesses pilotée ou automatique) et de l'accouplement (embrayage piloté ou convertisseur) entre l'arbre moteur ou vilebrequin du moteur thermique et l'arbre primaire de la boîte de vitesses. Une telle automatisation impose par conséquent l'adjonction d'actionneurs, d'une électronique de commande et de puissance pour le pilotage de la boîte de vitesses et de l'embrayage. Il est également nécessaire de prévoir un superviseur de la chaîne de traction assurant la coordination du pilotage de la boîte de vitesses et de l'embrayage. Enfin, le manque de place dans le volume alloué au groupe motopropulseur du véhicule et la présence ainsi que la complexité des nombreux composants faisant partie de ce groupe, à savoir la machine électrique tournante réversible ou alternato-démarreur, la boîte de vitesses, le moteur thermique, l'embrayage, la commande d'embrayage..., obligent à revoir à la baisse le dimensionnement de ces composants, notamment de la machine électrique tournante réversible dont les performances sont liées à son volume utile.

L'invention a pour but d'éliminer les inconvénients ci-dessus en proposant un dispositif d'accouplement entre l'arbre moteur d'un moteur thermique faisant partie d'un groupe motopropulseur hybride d'un véhicule automobile et un arbre en aval de l'arbre moteur, tel que l'arbre primaire de la boîte de vitesses associée au moteur thermique, et qui est caractérisé en ce qu'il comprend une roue libre interposée entre l'arbre moteur et l'arbre aval et pouvant occuper un état libre auquel les deux arbres ne sont pas accouplés l'un à l'autre si la vitesse de rotation de l'arbre moteur est inférieure à celle de l'arbre aval ou un état bloqué auquel les deux arbres sont accouplés l'un à l'autre si la vitesse de rotation de l'arbre moteur est égale à celle de l'arbre aval et si le couple de force du moteur est positif.

Ainsi, la roue libre est utilisée en lieu et place de l'embrayage piloté traditionnel, ce qui alloue au groupe motopropulseur un volume plus important d'implantation des autres composants, notamment de la machine électrique tournante réversible, et permet de réduire notablement les coûts d'un tel groupe tout en simplifiant le contrôle de la chaîne de traction.

Le dispositif d'accouplement comprend également un étage de filtration des irrégularités cycliques du moteur thermique et qui est interposé entre la roue libre et l'arbre moteur.

De préférence, l'étage de filtration comprend deux plaques annulaires jumelées entourant concentriquement la roue libre en s'étendant perpendiculairement à l'arbre primaire, l'une des plaques annulaires étant solidaire du volant d'inertie fixé à l'arbre moteur, une plaque annulaire intermédiaire disposée entre les deux plaques jumelées en étant solidaire en rotation de la roue libre et sensiblement parallèle aux plaques jumelées, et au moins deux organes élastiques d'accouplement de la plaque intermédiaire aux deux plaques jumelées, solidaires de la plaque intermédiaire en étant diamétralement opposés et permettant aux plaques jumelées d'appliquer sur les deux organes élastiques un couple de forces en direction de leur élasticité qui est transmis à la plaque intermédiaire et à la roue libre lorsque les deux arbres aval et moteur sont accouplés l'un à l'autre.

Les deux organes élastiques sont constitués par des ressorts hélicoïdaux de compression logés respectivement dans deux fenêtres rectangulaires diamétralement opposées de la plaque intermédiaire et orientées de manière que les axes longitudinaux des deux ressorts soient parallèles et tangentiels à un cercle de la plaque intermédiaire, chaque ressort étant précontraint par ses spires extrêmes en appui sur les deux bords de sa fenêtre correspondante transversaux à l'axe longitudinal du ressort et débordant symétriquement de chaque côté de la plaque intermédiaire pour s'engager dans deux fenêtres respectivement des deux plaques jumelées en regard de la fenêtre de la plaque intermédiaire de façon que les deux spires extrêmes du ressort soient également en appui sur les bords correspondants des fenêtres des deux plaques jumelées.

Chaque ressort est maintenu dans sa fenêtre correspondante par une languette solidaire de l'un des bords transversaux de la fenêtre en s'étendant perpendiculairement à celui-ci dans le plan de la plaque intermédiaire et traversant sensiblement coaxialement le ressort jusqu'à ce que son extrémité libre soit située au voisinage du bord transversal opposé de la fenêtre.

De préférence, on prévoit quatre ressorts d'accouplement deux à deux diamétralement opposés et logés respectivement dans quatre fenêtres de la plaque intermédiaire.

La plaque intermédiaire est solidarisée en rotation à la roue libre par des cannelures bombées autorisant de légers déplacements radiaux entre la plaque intermédiaire et la roue libre et un débattement de la plaque intermédiaire relativement à la roue libre de part et d'autre de sa position perpendiculaire à l'arbre aval.

Les deux plaques jumelées sont solidarisées l'une à l'autre par des rivets transversaux aux plaques et traversant avec jeu respectivement des perçages de la plaque intermédiaire.

L'une des plaques jumelées est fixée au volant d'inertie par des vis de fixation.

La roue libre peut être du type à cames ou à cliquets frontaux.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en coupe longitudinale représentant une partie d'un groupe motopropulseur hybride d'un véhicule automobile comportant un dispositif de l'invention permettant l'accouplement entre l'arbre vilebrequin du moteur thermique et l'arbre primaire de la boîte de vitesses de ce véhicule ;
- la figure 2 est une vue de côté suivant la flèche II de la figure 1 de l'une des plaques jumelées du dispositif d'accouplement de l'invention ; et
- la figure 3 est une vue de côté suivant la flèche III de la figure 1 de la plaque intermédiaire disposée entre les deux plaques jumelées du dispositif d'accouplement de l'invention.

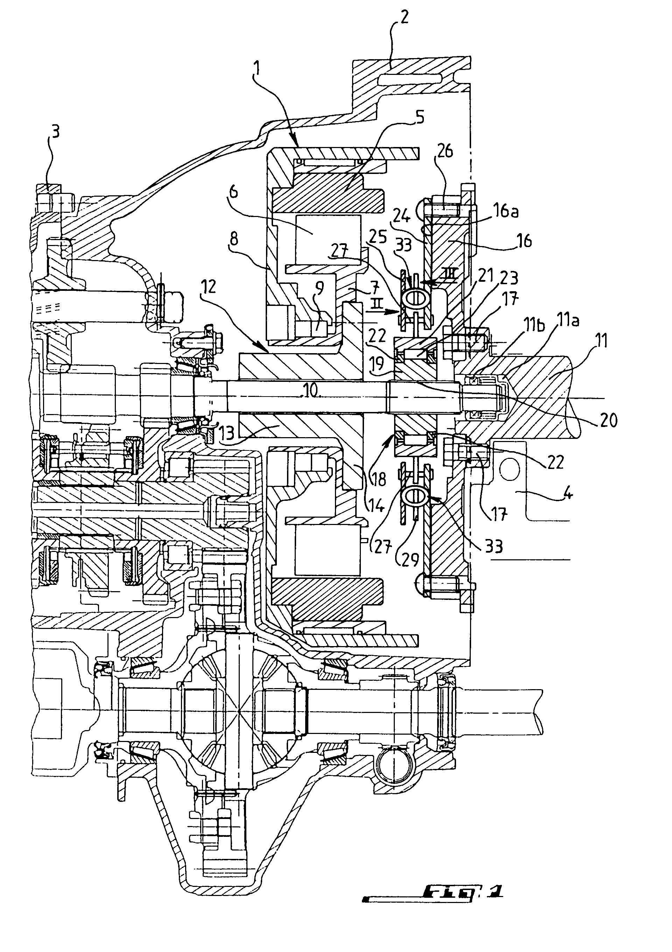

En se reportant à la figure 1, la référence 1 désigne une machine électrique tournante réversible ou alternateur-démarreur, logée dans un carter d'embrayage 2 qui est fixé entre le carter 3 de la boîte de vitesses et le carter 4 du moteur thermique d'un véhicule automobile.

La machine électrique 1 fait partie d'un groupe motopropulseur hybride.

Cette machine comprend essentiellement un stator annulaire 5 qui est fixe relativement au carter d'embrayage 2 et un rotor annulaire 6 logé dans le stator fixe 5 en définissant par rapport à ce dernier un entrefer.

Le rotor 6 est monté de façon solidaire sur un moyeu de support 7 qui est monté à rotation relativement à un carter indépendant 8 par l'intermédiaire d'un palier 9, par exemple du type roulement à billes.

L'ensemble constitué par le stator 5, le rotor 6, le moyeu 7 et le palier 9 est logé dans le carter indépendant 8 qui est fixé au carter d'embrayage 2 par des vis de fixation (non représentées) de façon que le carter 8 soit logé dans le carter d'embrayage 2 en étant espacé de ce dernier.

Le moyeu de support 7 est disposé concentriquement autour d'un arbre primaire ou arbre d'entrée 10 de la boîte de vitesses 3 situé en aval de l'arbre moteur 11 du moteur thermique. L'arbre primaire 10 est monté à rotation, à son extrémité opposée à la boîte de vitesses 3, dans un alésage borgne 11a réalisé en bout de l'arbre moteur ou de vilebrequin 11 du moteur thermique. L'arbre primaire 10 peut être repris dans le nez de l'arbre vilebrequin 11a au moyen du roulement 11b.

Le rotor 6 de la machine électrique 1 est accouplé à l'arbre primaire 10 par l'intermédiaire d'une pièce d'accouplement 12 comportant un manchon 13 disposé concentriquement entre le moyeu 7 du rotor 6 et l'arbre primaire 10 en étant lié en rotation à ce dernier par des cannelures, et un plateau circulaire 14 solidaire du manchon 13 à une extrémité de celui-ci et fixé au moyeu 7 par exemple par des vis (non représentées).

Ainsi, lorsque la machine électrique 1 est alimentée en courant électrique, le rotor 6 et le moyeu 7 tournent à l'unisson et le moyeu 7 entraîne en rotation le plateau 14 et le manchon 13 pour entraîner également en rotation l'arbre primaire 10 de la boîte de vitesses 3.

Le manchon 13 et le plateau 14 sont de préférence réalisés en une seule pièce.

Un volant d'inertie 16 est fixé à l'arbre de vilebrequin 11 par des vis de fixation 17.

Selon l'invention, un dispositif d'accouplement est prévu en lieu et place de l'embrayage piloté traditionnel entre l'arbre de vilebrequin 11 et l'arbre primaire 10 de la boîte de vitesses.

Ce dispositif d'accouplement comprend une roue libre 18 interposée entre l'arbre de vilebrequin 11 et l'arbre primaire 10 de manière à occuper soit un état libre auquel les deux arbres 10, 11 ne sont pas accouplés l'un à l'autre si la vitesse de rotation de l'arbre de vilebrequin 11 est inférieure à la vitesse de rotation de l'arbre primaire 10, soit un état bloqué auquel les deux arbres 10, 11 sont accouplés l'un à l'autre si la vitesse de rotation de l'arbre de vilebrequin 11 est égale à celle de l'arbre primaire 10 et si le couple de force du moteur est positif.

La roue libre 18 qui va être décrite est du type à rouleaux ou à cames connue en soi, mais il est bien entendu qu'elle peut être de tout autre type, tel qu'une roue libre à cliquets frontaux.

Ainsi, la roue libre 18 comprend une bague intérieure 19 liée en rotation à l'arbre primaire 10 par des cannelures 20, une bague extérieure 21 centrée relativement à la bague intérieure 20 par deux roulements axialement distants l'un de l'autre 22 et des rouleaux ou galets cylindriques 23 interposés de façon régulière entre les deux bagues intérieure 19 et extérieure 21. A l'état libre, les rouleaux 23 glissent sur une piste cylindrique circulaire réalisée dans la bague extérieure 21 et à l'état bloqué, les rouleaux se coincent entre les deux bagues 19, 21.

La roue libre 18 peut être accouplée à l'arbre de vilebrequin 11 par l'intermédiaire d'un étage de filtration des irrégularités cycliques du moteur thermique.

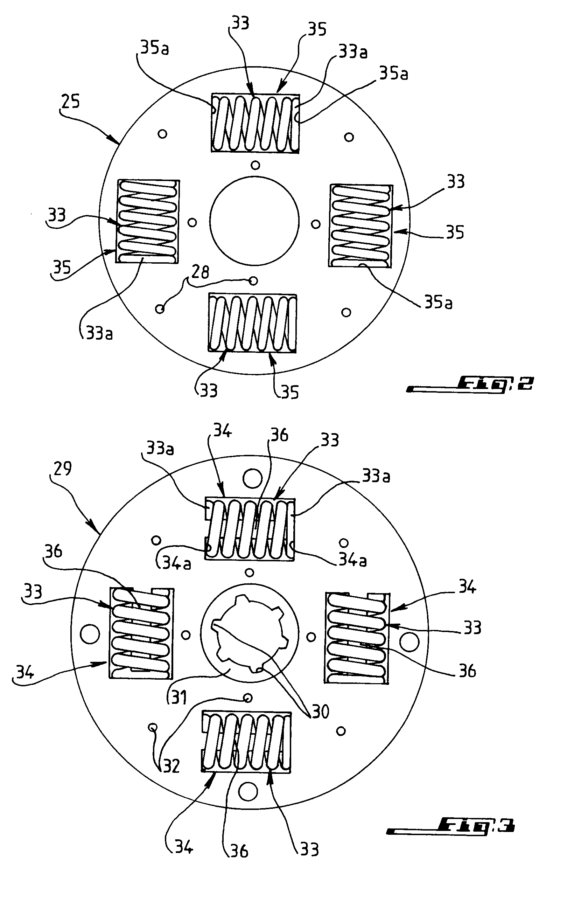

Cet étage de filtration comprend deux plaques annulaires jumelées 24, 25 entourant concentriquement avec jeu radial la bague extérieure 21 de la roue libre 18 en s'étendant perpendiculairement à l'arbre primaire 10. L'une 24 de plus grand diamètre des plaques jumelées est solidaire, par des vis de fixation 26, du volant d'inertie 16 en étant plaquée en appui sur la face dressée 16a de ce volant et les deux plaques annulaires 24, 25 sont jumelées l'une à l'autre par des rivets 27 s'étendant parallèlement à l'axe longitudinal de l'arbre primaire 10 et régulièrement espacés les uns des autres de manière à maintenir écartées l'une de l'autre d'une distance déterminée les deux plaques 24, 25. La plaque 25 est représentée en figure 2 qui montre deux séries de perçages 28 permettant le passage des rivets 27 et situées respectivement sur deux circonférences distinctes de la plaque 25, chacune des séries comprenant quatre perçages 28 régulièrement espacés. Bien entendu, la plaque 24 comporte également deux séries de perçages identiques à celles de la plaque 25 pour le passage des rivets 27.

L'étage de filtration comprend de plus une plaque annulaire intermédiaire 29, mieux visible en figure 3, disposée entre les deux plaques 24, 25 sensiblement parallèlement à celles-ci et qui est solidaire en rotation de la bague extérieure 21 de la roue libre 18 par l'intermédiaire de cannelures bombées 30 de la plaque 29 coopérant avec des dents bombées de la bague extérieure 21. Cette liaison par cannelures a un jeu suffisant pour permettre des mouvements radiaux entre la plaque intermédiaire 29 et la bague externe 21 de la roue libre 18 ainsi que des débattements relatifs de part et d'autre de sa position transversale à l'arbre 10 de la plaque intermédiaire 29 relativement à la bague extérieure 21. Les cannelures sont bombées dans le sens où leurs génératrices ne sont pas des droites parallèles à l'axe de la bague externe 21, mais des arcs de cercle de grand rayon. La figure 3 montre que les cannelures 30 sont réalisées dans une bague annulaire intermédiaire 31 solidaire coaxialement de l'ouverture centrale circulaire de la plaque intermédiaire 29, mais de telles cannelures peuvent être réalisées directement dans la plaque 29 suivant la matière de cette dernière. Les rivets 27 solidarisant les plaques annulaires 24, 25 traversent respectivement des perçages 32 de la plaque 29 et d'un diamètre supérieur au diamètre des rivets et donc au diamètre des perçages 28 de la plaque 25.

L'étage de filtration comprend enfin au moins deux organes élastiques 33, de préférence au nombre de quatre, permettant l'accouplement de la plaque intermédiaire 29 aux deux plaques jumelées 24, 25.

Ces organes élastiques 33 sont constitués par des ressorts hélicoïdaux de compression solidaires de la plaque intermédiaire 29 de telle manière à permettre aux plaques jumelées 24, 25 d'appliquer sur les ressorts 33 un couple de forces dirigées dans la direction d'élasticité des ressorts 33, couple qui est transmis à la plaque intermédiaire 29 et à l'arbre primaire 10 lorsque la roue libre 18 se trouve à l'état bloqué d'accouplement de l'arbre de vilebrequin 11 à l'arbre primaire 10.

Les ressorts 33 sont maintenus respectivement dans des fenêtres rectangulaires diamétralement opposées 34 de la plaque intermédiaire 29 en débordant par leurs spires adjacentes symétriquement de part et d'autre de la plaque 29 de manière que chaque ressort 33 puisse être également logé respectivement dans deux fenêtres rectangulaires 35 des deux plaques 24, 25, identiques à la fenêtre 34 comportant le ressort 33 et situées de part et d'autre de la fenêtre 34 en regard de cette dernière. Plus précisément, les fenêtres rectangulaires 34 seront orientées de manière que leurs grands axes géométriquement confondus respectivement avec les axes longitudinaux des ressorts 33 soient deux à deux parallèles et tangentiels à un cercle de la plaque intermédiaire 29 et chaque ressort 33 est monté précontraint dans sa fenêtre 34 par ses deux spires extrêmes 33a en appui respectivement sur les deux bords 34a de la fenêtre 34 s'étendant transversalement à l'axe longitudinal du ressort 33. Chaque ressort 33 est maintenu dans la fenêtre correspondante 34 par une languette 36 solidaire de l'un des bords transversaux 34a de la fenêtre 34 en s'étendant perpendiculairement à celui-ci dans le plan de la plaque intermédiaire 29 et traversant sensiblement coaxialement le ressort 33 jusqu'à ce que son extrémité libre soit située au voisinage du bord transversal opposé 34a de la fenêtre 34.

Les dispositions des fenêtres 35 des plaques jumelées 24 et 25 sont identiques à celles des fenêtres 34 de la plaque 29 et chaque ressort 33, en débordant symétriquement de la fenêtre 34 de part et d'autre de la plaque intermédiaire 29 a également ses spires extrêmes 33a en appui sur les bords transversaux correspondant 35a des deux fenêtres 35 des plaques 24, 25 situées de chaque côté de la fenêtre 34 en regard de celle-ci.

Le fonctionnement du dispositif d'accouplement, qui ressort déjà de la description qui précède, va être maintenant expliqué.

En fonction des stratégies de commande du groupe motopropulseur hybride, et notamment du choix des consignes de puissance du moteur thermique et de la machine électrique tournante réversible, il est impératif d'accoupler et de transmettre le couple du moteur thermique à l'arbre primaire 10 de la boîte de vitesses dès qu'une contribution en puissance est demandée au moteur thermique. Dans ce cas, on demande immédiatement du couple au moteur thermique, qui était préalablement à l'état arrêté ou au ralenti. Ce dernier monte alors en régime jusqu'à ce que la vitesse de rotation de l'arbre de vilebrequin 11 atteigne la vitesse de rotation de l'arbre primaire 10 qui se trouve à une valeur déterminée résultant de la vitesse du véhicule et de la démultiplication engagée. Avant que la vitesse de rotation de l'arbre de vilebrequin 11 atteigne celle de l'arbre primaire 10, la roue libre 18 est à l'état libre de sorte que l'arbre primaire 10 est désaccouplé de l'arbre vilebrequin 11 et aucun couple n'est donc transmis. Dès que la vitesse de rotation de l'arbre de vilebrequin 11 atteint celle de l'arbre primaire, les deux arbres 10, 11 sont accouplés l'un à l'autre et l'intégralité du couple moteur est transmise à l'arbre primaire. Lors du passage du couple de forces provenant du volant d'inertie 16, les deux plaques jumelées 24, 25 exercent des efforts tangentiels sur les ressorts 33 qui transmettent ces efforts à la plaque intermédiaire 29 par leurs spires extrêmes 33a en appui sur les bords transversaux correspondant 34a des fenêtres 34 et, par conséquent, à la bague externe 21 de la roue libre 18. Lors de la transmission de ces efforts, les ressorts 33 filtrent les irrégularités cycliques du moteur thermique et permettant d'assurer une protection de la roue libre.

Le dispositif d'accouplement de l'invention peut être intercalé entre n'importe quel type de moteur, à essence ou diesel, quel que soit le nombre de cylindres de celui-ci et n'importe quel type de transmission.

En outre, ce dispositif d'accouplement permet d'utiliser un moteur électrique capable d'entraîner dans toutes les conditions le véhicule, la plus sévère étant le démarrage en côte du véhicule, jusqu'à une vitesse minimale qui correspond au régime minimal de fonctionnement du moteur thermique, correspondant à environ 10 km/heure.

Le dispositif d'accouplement permet en outre de supprimer la commande rapprochée de l'embrayage ainsi que l'actionneur nécessaire au pilotage de celui-ci. Il permet de supprimer ou de simplifier une partie de l'électronique de puissance et de commande de la transmission. Ce dispositif d'accouplement permet également de simplifier le contrôle global de la chaîne de traction (stratégies, architecture électronique, interfaces, logiciel, etc). Enfin, il permet un gain de place dans le carter d'embrayage ou de convertisseur puisque la roue libre est moins volumineuse que l'embrayage, de sorte que la place gagnée peut être allouée à la machine électrique tournante réversible. Bien entendu le nombre de ressorts, de rivets et de dents / cannelures n'est donné et représenté qu'à titre indicatif et peut varier.

## Revendications

1. Dispositif d'accouplement entre l'arbre moteur (11) d'un moteur thermique faisant partie d'un groupe motopropulseur hybride d'un véhicule automobile et un arbre (10) en aval de l'arbre moteur (11), tel que l'arbre primaire (10) de la boîte de vitesses associée au moteur thermique, **caractérisé en ce qu'**il comprend une roue libre (18) interposée entre l'arbre moteur (11) et l'arbre aval (10) en étant montée sur l'arbre aval (10) et pouvant occuper un état libre auquel les deux arbres (10, 11) ne sont pas accouplés l'un à l'autre si la vitesse de rotation de l'arbre moteur (11) est inférieure à celle de l'arbre aval (10) ou un état bloqué auquel les deux arbres (10,11) sont accouplés l'un à l'autre si la vitesse de rotation de l'arbre moteur (11) est égale à celle de l'arbre aval (10) et si le couple de force du moteur est positif.

2. Dispositif selon la revendication 1, **caractérisé en ce qu'**il comprend également un étage de filtration (24, 25, 29, 33) des irrégularités cycliques du moteur thermique interposé entre la roue libre (18) et l'arbre moteur (11).

3. Dispositif selon la revendication 2, **caractérisé en ce que** l'étage de filtration comprend deux plaques annulaires jumelées (24, 25) entourant concentriquement la roue libre (18) en s'étendant perpendiculairement à l'arbre aval (10), l'une (24) des plaques (24, 25) étant solidaire du volant d'inertie (16) fixé à l'arbre moteur (11), une plaque annulaire intermédiaire (29) disposée entre les deux plaques jumelées (24, 25) en étant solidaire en rotation de la roue libre (18) et sensiblement parallèle aux plaques jumelées (24, 25), et au moins deux organes élastiques (33) d'accouplement de la plaque intermédiaire (29) aux deux plaques jumelées (24,25), solidaires de la plaque intermédiaire (29) en étant diamétralement opposés et permettant aux plaques jumelées (24, 25) d'appliquer sur les deux organes élastiques (33) un couple de forces en direction de leur élasticité et qui est transmis à la plaque intermédiaire (29) et à la roue libre (18) lorsque les deux arbres aval (10) et moteur (11) sont accouplés l'un à l'autre.

4. Dispositif selon la revendication 3, **caractérisé en ce que** les deux organes élastiques (33) sont constitués par des ressorts hélicoïdaux de compression logés respectivement dans deux fenêtres rectangulaires diamétralement opposées (34) de la plaque intermédiaire (29) et orientées de manière que les axes longitudinaux des deux ressorts (33) soient parallèles et tangentiels à un cercle de la plaque intermédiaire (29), chaque ressort (33) étant précontraint par ses spires extrêmes (33a) en appui sur les deux bords (34a) de sa fenêtre correspondante (34) transversaux à l'axe longitudinal du ressort (33) et débordant symétriquement de chaque côté de la plaque intermédiaire (29) pour s'engager dans deux fenêtres (35) respectivement des deux plaques jumelées (24, 25) en regard de la fenêtre (34) de la plaque intermédiaire (29) de façon que les deux spires extrêmes (33a) du ressort (33) soient également en appui sur les bords correspondants (35a) des fenêtres (35) des deux plaques jumelées (24, 25).

5. Dispositif selon la revendication 4, **caractérisé en ce que** chaque ressort (33) est maintenu dans sa fenêtre correspondante (34) par une languette (36) solidaire de l'un des bords transversaux (34a) de la fenêtre (34) en s'étendant perpendiculairement à celui-ci dans le plan de la plaque intermédiaire (29) et traversant sensiblement coaxialement le ressort (33) jusqu'à ce que son extrémité libre soit située au voisinage du bord transversal opposé (34a) de la fenêtre (34).

6. Dispositif selon la revendication 4 ou 5, **caractérisé en ce qu'**il comprend quatre ressorts d'accouplement (33) deux à deux diamétralement opposés et logés respectivement dans quatre fenêtres (34) de la plaque intermédiaire (29).

7. Dispositif selon l'une des revendications 3 à 6, **caractérisé en ce que** la plaque intermédiaire (29) est solidarisée en rotation à la roue libre (18) par des cannelures bombées (30) autorisant de légers déplacements radiaux entre la plaque intermédiaire (29) et la roue libre (18) et un débattement de la plaque intermédiaire (29) relativement à la roue libre (18) de part et d'autre de sa position perpendiculaire à l'arbre aval (10).

8. Dispositif selon l'une des revendications 3 à 7, **caractérisé en ce que** les deux plaques jumelées (24, 25) sont solidarisées l'une à l'autre par des rivets (27) transversaux aux plaques (24, 25) et traversant avec jeu respectivement des perçages (32) de la plaque intermédiaire (29).

9. Dispositif selon l'une des revendications 3 à 8, **caractérisé en ce que** l'une (24) des plaques jumelées (24, 25) est fixée au volant d'inertie (16) par des vis de fixation (17).

10. Dispositif selon l'une des revendications précédentes, **caractérisé en ce que** la roue libre (18) est du type à cames ou à cliquets frontaux.
